# EUROPEAN PATENT APPLICATION

(11) **EP 4 851 804 A1**
(43) Date of publication of application: **09.12.2026**
(21) Application number: 26180941.2
(22) Date of filing: 26.05.2026
(51) Int. Cl.: G06F 9/50, G06F 9/48, G06N 3/08, G06N 20/00

(54) **DYNAMIC ASSIGNMENT OF PROCESSOR CORES FOR PRIORITY WORKLOADS AND ELASTIC WORKLOADS USING DEDICATED MACHINE LEARNING MODELS**

(30) Priority: 04.06.2025 US 202519228621
(71) Applicant: VMware LLC, Palo Alto, CA 94304 (US)
(72) Inventor: Beveridge, Daniel, Valrico, 33596 (US); Nagendra, Nagashree, 560104 Bangalore (IN); Lyons, Corey, Maumee, 43537 (US)
(74) Representative: Bosch Jehle Patentanwaltsgesellschaft mbH

(57) **Abstract**

A host computer is configured to execute a plurality of priority workloads and an elastic workload, by performing the steps of: determining, for each of the priority workloads, one or more metrics for a previous amount of processing resources used thereby; executing first machine learning (ML) models respectively associated with the priority workloads to predict expected future amounts of processing resources to be used respectively by the priority workloads, and determining an aggregate amount for all the priority workloads; determining, for the elastic workload, one or more metrics for a previous amount of processing resources used thereby; executing a second ML model associated with the elastic workload to predict an expected future amount of processing resources to be used by the elastic workload; and executing the priority workloads and the elastic workload according to the determined aggregate amount and the expected future amount of processing resources for the elastic workload.

## Description

Workloads today benefit from virtualization by running in virtualized compute instances such as virtual machines (VMs). Virtualization enables organizations and individuals to run multiple isolated computing environments on a single physical host computer, referred to herein simply as a "host." This functionality improves the resource utilization, scalability, and cost efficiency of running workloads on those hosts. However, such improvements depend greatly on achieving high compute density, i.e., on maximizing the use of available processing resources on the virtualized hosts.

Today, systems that utilize virtualization often struggle to achieve high compute densities. For example, hosts of such systems often use only 25 percent of their available processing resources over a 24-hour period or even less. Accordingly, a significant amount of processing resources, which an organization or individual is likely paying for, are often sitting idle. Such underutilization diminishes many of the above improvements that virtualization strives for. There is thus a desire to improve the compute densities of hosts that utilize virtualization.

One or more embodiments provide a host computer including a processor and memory, wherein the processor executes instructions stored in the memory to execute a plurality of priority VMs and an elastic VM using machine-learning (ML) models, to increase a compute density of the host computer. By executing such instructions, the host computer performs the steps of: determining, for each of the priority VMs, one or more metrics for a previous amount of processing resources used thereby; executing first ML models respectively associated with the priority VMs to predict expected future amounts of processing resources to be used respectively by the priority VMs, each of the first ML models being executed based on the determined one or more metrics for the previous amount of processing resources used by the respective priority VM, and determining an aggregate amount of processing resources to be used by all the priority VMs based on the expected future amounts of processing resources to be used by the priority VMs; determining, for the elastic VM, one or more metrics for a previous amount of processing resources used thereby; executing a second ML model associated with the elastic VM to predict an expected future amount of processing resources to be used by the elastic VM, the second ML model being executed based on the determined one or more metrics for the previous amount of processing resources used by the elastic VM; and executing the priority VMs on a first number of processing cores of the processor, and executing the elastic VM on a second number of processing cores of the processor, according to the determined aggregate amount of processing resources to be used by all the priority VMs and the expected future amount of processing resources to be used by the elastic VM.

Further embodiments include a method comprising the above steps and a non-transitory computer-readable storage medium comprising instructions that cause a host computer to carry out the above steps.

According to an aspect, a host computer is provided including a processor having a plurality of processing cores and memory, wherein the processor executes instructions stored in the memory to perform steps for executing a plurality of priority workloads and an elastic workload using machine-learning (ML) models, to increase a compute density of the host computer, the steps comprising:
determining, for each of the priority workloads, one or more metrics for a previous amount of processing resources used thereby;
executing first ML models respectively associated with the priority workloads to predict expected future amounts of processing resources to be used respectively by the priority workloads, each of the first ML models being executed based on the determined one or more metrics for the previous amount of processing resources used by the respective priority workload, and determining an aggregate amount of processing resources to be used by all the priority workloads based on the expected future amounts of processing resources to be used by the priority workloads;
determining, for the elastic workload, one or more metrics for a previous amount of processing resources used thereby;
executing a second ML model associated with the elastic workload to predict an expected future amount of processing resources to be used by the elastic workload, the second ML model being executed based on the determined one or more metrics for the previous amount of processing resources used by the elastic workload; and
executing the priority workloads on a first number of processing cores of the processor, and executing the elastic workload on a second number of processing cores of the processor, according to the determined aggregate amount of processing resources to be used by all the priority workloads and the expected future amount of processing resources to be used by the elastic workload.

Advantageously, the first ML models and second ML model are artificial neural networks, and the steps further comprise:
determining, for each of the priority workloads after executing the priority workloads on the first number of processing cores, one or more metrics for an actual amount of processing resources used by the priority workload;
determining, for each of the first ML models, a first error amount based on the expected future amount of processing resources to be used by the respective priority workload and the one or more metrics for the actual amount of processing resources used by the respective priority workload; and
updating, for each of the first ML models, weights thereof based on the first error amount thereof.

Advantageously, the steps further comprise:
determining, for each of the first ML models, a first reward or a first penalty based on the first error amount thereof, the weights of each of the first ML models being updated according to the first reward or first penalty thereof.

Advantageously, the steps further comprise:
determining, for the elastic workload after executing the elastic workload on the second number of processing cores, one or more metrics for an actual amount of processing resources used by the elastic workload;
determining, for the second ML model, a second error amount based on the expected future amount of processing resources to be used by the elastic workload and the one or more metrics for the actual amount of processing resources used by the elastic workload; and
updating weights of the second ML model based on the second error amount.

Advantageously, the steps further comprise:
retrieving, from shared storage, a seed model associated with one of the first ML models, the seed model being an earlier version of the one of the first ML models, and the seed model having been trained by the host computer or by another host computer based on another instance of one of the priority workloads executing on the host computer or on the other host computer.

Advantageously, the steps further comprise:
querying, using an agent process separate from a hypervisor executing on the host computer, the hypervisor to determine the one or more metrics for the previous amounts of processing resources used by the priority workloads, the agent process executing the first ML models and the second ML model; and
querying, using the agent process, the hypervisor to determine the one or more metrics for the previous amount of processing resources used by the elastic workload.

Advantageously, the steps further comprise:
identifying, for each of the priority workloads and for the elastic workload, data points for the previous amount of processing resources used thereby, the data points for each of the priority workloads and for the elastic workload being collected at polling intervals over a learning window.

Advantageously, the steps further comprise:
determining, for each of the priority workloads, the one or more metrics for the previous amount of processing resources used thereby as one or more of a minimum, maximum, mean, median, and standard deviation, of the data points for the priority workload; and
determining, for the elastic workload, the one or more metrics for the previous amount of processing resources used thereby as one or more of a minimum, maximum, mean, median, and standard deviation, of the data points for the elastic workload.

Advantageously, the previous amount of processing resources used by one of the priority workloads or by the elastic workload was used over a first time period, and wherein the steps further comprise:
determining, for the one of the priority workloads or the elastic workload based on the previous amount of processing resources used thereby and based on an amount of processing resources used thereby during a second time period before the first time period, that a change in the amount of processing resources used thereby is less than a threshold; and
increasing a learning window for collecting data points based on the change being less than the threshold.

Advantageously, the steps further comprise:
pinning each of the priority workloads to one or more processing cores of a first affinity pool of the host computer, the first affinity pool including the first number of processing cores; and
pinning the elastic workload to a plurality of processing cores of a second affinity pool of the host computer, the second affinity pool including the second number of processing cores, and the first and second affinity pools including separate processing cores of the host computer.

Advantageously, the steps further include:
determining that the determined aggregate amount of processing resources to be used by all the priority workloads and the expected future amount of processing resources to be used by the elastic workload, combine to exceed a total amount of processing resources of the host computer available to the priority workloads and elastic workload, and in response thereto, decreasing the second number of processing cores of the processor.

Advantageously, the steps further include:
determining that the determined aggregate amount of processing resources to be used by all the priority workloads and the expected future amount of processing resources to be used by the elastic workload, combine to be less than a total amount of processing resources of the host computer available to the priority workloads and elastic workload, and in response thereto, increasing the first and second numbers of cores according to a pre-determined ratio.

According to an aspect, a method is provided of executing a plurality of priority workloads and an elastic workload using machine-learning (ML) models, to increase a compute density of a host computer, the method comprising:
determining, for each of the priority workloads, one or more metrics for a previous amount of processing resources used thereby;
executing first ML models respectively associated with the priority workloads to predict expected future amounts of processing resources to be used respectively by the priority workloads, each of the first ML models being executed based on the determined one or more metrics for the previous amount of processing resources used by the respective priority workload, and determining an aggregate amount of processing resources to be used by all the priority workloads based on the expected future amounts of processing resources to be used by the priority workloads;
determining, for the elastic workload, one or more metrics for a previous amount of processing resources used thereby;
executing a second ML model associated with the elastic workload to predict an expected future amount of processing resources to be used by the elastic workload, the second ML model being executed based on the determined one or more metrics for the previous amount of processing resources used by the elastic workload; and
executing the priority workloads on a first number of processing cores of a processor, and executing the elastic workload on a second number of processing cores of the processor, according to the determined aggregate amount of processing resources to be used by all the priority workloads and the expected future amount of processing resources to be used by the elastic workload.

Advantageously, the first ML models and second ML model are artificial neural networks, the method further comprising:
determining, for each of the priority workloads after executing the priority workloads on the first number of processing cores, one or more metrics for an actual amount of processing resources used by the priority workload;
determining, for each of the first ML models, a first error amount based on the expected future amount of processing resources to be used by the respective priority workload and the one or more metrics for the actual amount of processing resources used by the respective priority workload; and
updating, for each of the first ML models, weights thereof based on the first error amount thereof.

Advantageously, the method further comprises:
determining, for each of the first ML models, a first reward or a first penalty based on the first error amount thereof, the weights of each of the first ML models being updated according to the first reward or first penalty thereof.

Advantageously, the method further comprises:
determining, for the elastic workload after executing the elastic workload on the second number of processing cores, one or more metrics for an actual amount of processing resources used by the elastic workload;
determining, for the second ML model, a second error amount based on the expected future amount of processing resources to be used by the elastic workload and the one or more metrics for the actual amount of processing resources used by the elastic workload; and
updating weights of the second ML model based on the second error amount.

Advantageously, the method further comprises:
retrieving, from shared storage, a seed model associated with one of the first ML models, the seed model being an earlier version of the one of the first ML models, and the seed model having been trained based on another instance of one of the priority workloads.

According to an aspect, a non-transitory, computer-readable medium is provided comprising instructions that are executable in a host computer, wherein the instructions when executed cause the host computer to carry out a method of executing a plurality of priority workloads and an elastic workload using machine-learning (ML) models, to increase a compute density of the host computer, and wherein the method comprises:
determining, for each of the priority workloads, one or more metrics for a previous amount of processing resources used thereby;
executing first ML models respectively associated with the priority workloads to predict expected future amounts of processing resources to be used respectively by the priority workloads, each of the first ML models being executed based on the determined one or more metrics for the previous amount of processing resources used by the respective priority workload, and determining an aggregate amount of processing resources to be used by all the priority workloads based on the expected future amounts of processing resources to be used by the priority workloads;
determining, for the elastic workload, one or more metrics for a previous amount of processing resources used thereby;
executing a second ML model associated with the elastic workload to predict an expected future amount of processing resources to be used by the elastic workload, the second ML model being executed based on the determined one or more metrics for the previous amount of processing resources used by the elastic workload; and
executing the priority workloads on a first number of processing cores of a processor of the host computer, and executing the elastic workload on a second number of processing cores of the processor, according to the determined aggregate amount of processing resources to be used by all the priority workloads and the expected future amount of processing resources to be used by the elastic workload.

Advantageously, the method further comprises:
identifying, for each of the priority workloads and for the elastic workload, data points for the previous amount of processing resources used thereby, the data points for each of the priority workloads and for the elastic workload being collected at polling intervals over a learning window.

Advantageously, the method further comprises:
determining, for each of the priority workloads, the one or more metrics for the previous amount of processing resources used thereby as one or more of a minimum, maximum, mean, median, and standard deviation, of the data points for the priority workload; and
determining, for the elastic workload, the one or more metrics for the previous amount of processing resources used thereby as one or more of a minimum, maximum, mean, median, and standard deviation, of the data points for the elastic workload.

### Brief Description of the Drawings

Figure 1A is a block diagram of a computer system in which a first embodiment may be implemented.
Figure 1B is a block diagram of the computer system in which a second embodiment may be implemented.
Figure 2 is a flow diagram of a method that may be performed by a host of the computer system to predict amounts of processing resources to be used by workloads of the host, according to some embodiments.
Figure 3 is a flow diagram of a method that may be performed by the host to train neural networks associated with the workloads and adjust the collection of data points for the workloads, according to some embodiments.
Figure 4 is a flow diagram of a method that may be performed by the host to adjust the sizes of pools of processing cores for the workloads and execute the workloads on the processing cores of the priority pools, according to some embodiments.

### Detailed Description

Techniques are described for improving the compute densities of hosts that utilize virtualization. According to embodiments, hosts run two types of workloads. A first type of workload, referred to herein as a "priority workload," is a process, thread, application, or service whose performance is considered to be important in a given context, such that performance degradation is to be minimized or avoided. Examples of priority workloads include latency-sensitive applications such as video conferencing or remote desktop sessions, real-time or near-real-time processing tasks such as financial trading engines, critical infrastructure components such as load balancers, etc.

A second type of workload, referred to herein as an "elastic workload," is a process, thread, application, or service that is capable of consuming significant processing resources when such processing resources are available, but is also able to yield processing resources when required by priority workloads. For example, an elastic workload may be an application that is training an artificial neural network or generating inferences using an artificial neural network. Each priority workload and elastic workload executes in a virtualized computing instance such as a VM. VMs executing priority workloads are referred to herein as "priority VMs," while VMs executing elastic workloads are referred to herein as "elastic VMs."

According to embodiments, each host may execute a plurality of priority VMs and one elastic VM. As the priority VMs and elastic VM execute, a host continually monitors the amounts of processing resources used by each of the priority VMs and the elastic VM. As such amounts change, the host continually adjusts amounts of processing resources allocated to the priority VMs and to the elastic VM. As the amounts of processing resources required by the priority VMs increase, more processing resources are provided thereto. As such required amounts of processing resources decrease, more processing resources are provided to the elastic VM. Because the resource requirements of the priority VMs are prioritized over that of the elastic VM, embodiments minimize degradation in the performance of the priority VMs. Furthermore, because the elastic VM is capable of effectively using extra processing resources when available, compute density of the host increases dramatically.

According to embodiments, as a host monitors the amounts of processing resources used by its priority VMs and elastic VM, the host executes machine learning (ML) models such as neural networks dedicated to individual priority VMs and to the elastic VM. An ML model is a mathematical or computational representation that is trained to learn patterns or relationships within data to generate predictions, decisions, or classifications. The ML models predict, based on the past performance of respective VMs, expected future usages of processing resources by the VMs. Because each VM is associated with its own dedicated ML model, the ML models are able to generate predictions of future resource consumption that are customized and thus increasingly accurate. Furthermore, the ML models are continuously trained based on the resource consumptions of their respective VMs, allowing such ML models to adjust predictions as the resource requirements of VMs change over time.

According to some embodiments, the priority VMs on a single host are provided an "affinity pool" dedicated to the priority VMs, and the elastic VM on that host is provided a separate affinity pool dedicated to the elastic VM. An affinity pool is a set of processor cores that are grouped together and assigned to specific tasks. Because affinity pools are utilized, the priority VMs are isolated from the elastic VM. In other words, the priority VMs do not run on any of the cores in the affinity pool of the elastic VM, and the elastic VM does not run on any of the cores in the affinity pool of the priority VMs. This prevents issues such as priority VMs being co-scheduled to run on the same cores as an elastic VM. The usage of affinity pools thus further improves the compute density of a host and the performance of priority VMs by reducing scheduling delays and overheads associated with moving VMs between physical cores. These and further aspects of the invention are discussed below with respect to the drawings.

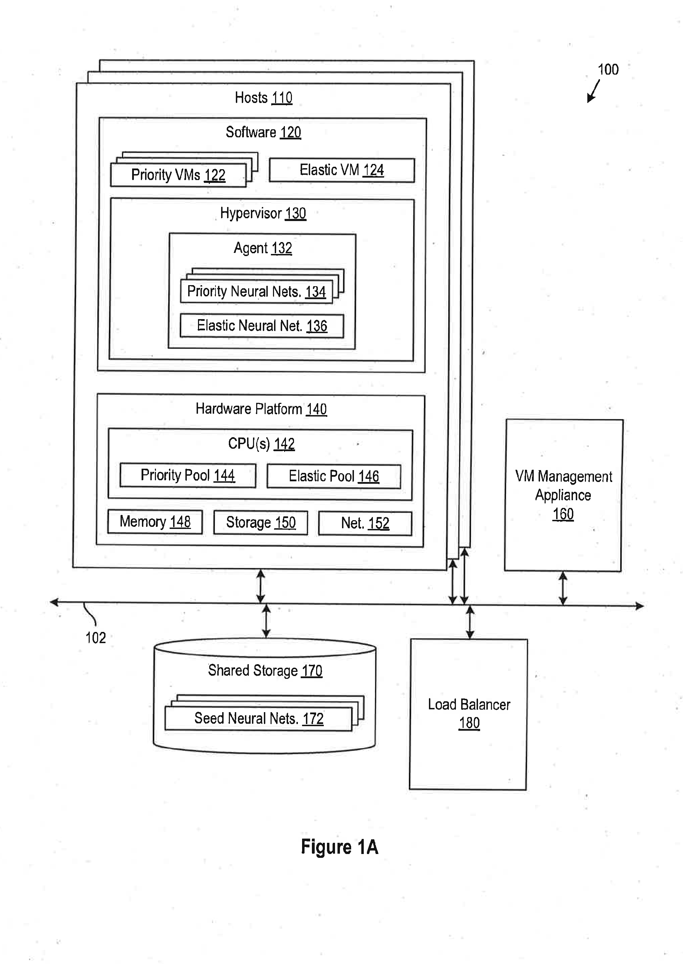

Figure 1A is a block diagram of a computer system 100 in which a first embodiment may be implemented. Computer system 100 includes a plurality of hosts 110, a VM management appliance 160, shared storage 170, and a load balancer 180. For example, hosts 110 may be deployed as one or more clusters. Each cluster is a group of hosts that are managed together to provide cluster-level functions. For example, the functions may include load balancing across the cluster, VM migration between hosts, distributed power management, dynamic VM placement according to affinity and anti-affinity rules, and high availability (HA).

Each of hosts 110, sometimes referred to herein in the singular as "host 110," is constructed on a hardware platform 140 such as an x86 architecture platform. Hardware platform 140 includes components of a computer, such as one or more central processing units (CPUs) 142, memory 148 such as random-access memory (RAM), local storage 150 such as one or more magnetic drives or solid-state drives (SSDs), and networking hardware 152 such as one or more network interface controllers (NICs). CPU(s) 142 are configured to execute instructions such as executable instructions that perform one or more operations described herein, which may be stored in memory 148. CPU(s) 142 may include a priority pool 144 and an elastic pool 146, which are affinity pools of processing cores. Priority pool 144 and elastic pool 146 are discussed further below. Using networking hardware 152, hosts 110 may communicate with each other and with other devices over a network 102 such as a local area network (LAN).

Hardware platform 140 supports software 120. Software 120 may include a hypervisor 130, which is a software layer or component that supports the execution of priority VMs 122 and elastic VM 124. One example of hypervisor 130 is a VMware ESX^{®} hypervisor, available from VMware LLC. Each of priority VMs 122 executes a priority workload, and elastic VM 124 executes an elastic workload. Elastic VM 124 of each of hosts 110 are sometimes referred to collectively herein as elastic VMs 124 among hosts 110.

A VM is a software emulation of a host including its own guest operating system (OS) that may support one or more workloads. VMs share the hardware resources of the hosts on which they execute, including the processing, memory, storage, and networking resources. A VM is an example of a virtualized computing instance, which is an addressable data compute node (DCN) or isolated user space instance, such as a VM or container. Although the disclosure is described with reference to VMs, the teachings herein also apply to other types of virtualized computing instances such as containers.

Priority VMs 122 may be pinned to cores of priority pool 144, and elastic VM 124 may be pinned to cores of elastic pool 146. Pinning VMs refers to the process of binding or assigning those VMs to cores, ensuring that those VMs are exclusively scheduled to run on those cores. As the collective CPU utilization of priority VMs 122 increase over time, the number of cores of CPU(s) 142 assigned to priority pool 144 may increase. As such CPU utilization decreases over time, the number of cores of CPU(s) 142 assigned to elastic pool 146 may increase. According to the first embodiment, hypervisor 130 includes an agent 132, which is a software component that continuously monitors the CPU utilization of priority VMs 122 and elastic VM 124.

For example, agent 132 may collect data points for such CPU utilization, e.g., in units of Megahertz (MHz), for each of priority VMs 122 and elastic VM 124. Agent 132 may collect such data points at polling intervals such as 1-second intervals and over learning windows such as 60-second windows. Polling intervals are frequencies at which data points may be collected, and learning windows are lengths of time over which data points may be grouped. For example, the polling intervals and learning windows may be the same for all of priority VMs 122 and elastic VM 124.

On the other hand, the polling intervals and learning windows may vary, e.g., including longer learning windows for VMs whose resource consumptions are more stable and shorter learning windows for VMs whose resource consumptions are more volatile. However, even if the polling and learning intervals vary, the sizes of priority pool 144 and elastic pool 146 may be adjusted at once, e.g., every 60 seconds. Consequently, assignments between the VMs and the cores of respective pools may be updated at once for all the VMs. Periods of time between such adjustments to priority pool 144 and elastic pool 146 are referred to herein as affinity pool adjustment windows.

Agent 132 predicts future CPU utilization of priority VMs 122 and elastic VM 124. To predict such utilization, agent 132 includes a plurality of priority neural networks 134 and an elastic neural network 136. Priority neural networks 134 and elastic neural network 136 are artificial neural networks, also referred to herein simply as "neural networks." Neural networks are machine-learning models consisting of interconnected layers of nodes, referred to as "neurons." A "neuron" is a fundamental unit or component of a neural network. Neurons in a neural network work together to process input data, transform it through layers of computation, and produce an output. Although embodiments are discussed with respect to neural networks, other types of ML models may instead be used for generating CPU utilization predictions.

Priority VMs 122 are associated respectively with priority neural networks 134, and elastic VM 124 is associated with elastic neural network 136. For example, priority neural networks 134 and elastic neural network 136 may use a conditional contextual bandit (CCB) algorithm, whereby each of the neural networks is applied in a reinforcement learning (RL) setting. RL is a type of machine learning in which an ML model learns how to make decisions by interacting with an environment to maximize a reward. Accordingly, each of priority neural networks 134 and elastic neural network 136 may learn to generate predictions and learn which predictions lead to the best outcomes over time. Furthermore, according to some embodiments, priority neural networks 134 and elastic neural network 136 may share a common processing space in CPU(s) 142 and a common memory space in memory 148. Each of priority neural networks 134 and elastic neural network 136 may be allocated its own "slot" in CPU(s) 142 and memory 148. Such arrangement may optimize the computational efficiency and memory utilization of priority neural networks 134 and elastic neural network 136.

For example, the inputs to each of priority neural networks 134 may be one or more metrics determined based on the data points for the respective one of priority VMs 122, which were collected by agent 132 over a previous learning window. Such metrics may include, for example, one or more of a minimum, maximum, mean, median, and standard deviation of such data points, e.g., in units of numbers of cores. For example, over the previous learning window, one of priority VMs 122 may, on average, use 1.5 cores worth of CPU resources. According to such example, a mean input for the respective one of priority neural networks 134 may be 1.5.

For example, the data points may indicate amounts of CPU cycles being occupied per second by associated VMs, e.g., in MHz. Agent 132 may divide such data points by the physical clock speed of the cores of CPU(s) 142 to determine inputs to priority neural networks 134. For example, agent 132 may translate a data point of 10,000 MHz to 5 cores if the clock speed of cores is 2 Gigahertz (GHz). The output of each of priority neural networks 134 is a predicted amount of CPU resources required by the respective one of priority VMs 122 over a next affinity pool adjustment window. For example, such outputs may be in units of numbers of cores. The outputs of priority neural networks 134 are aggregated to determine a size for priority pool 144, as discussed further below.

Similar to priority neural networks 134, the inputs to elastic neural network 136 may be one or more metrics determined based on the data points for elastic VM 124, which were collected by agent 132 over the previous learning window. For example, the inputs may be in units of numbers of cores. For example, the data points may indicate amounts of CPU cycles being occupied per second by elastic VM 124, e.g., in MHz. Agent 132 may divide such data points by the physical clock speed of the cores of CPU(s) 142 to determine inputs to elastic neural network 136. Similar to priority neural networks 134, the output of elastic neural network 136 is a predicted amount of CPU resources required by elastic VM 124 over a next affinity pool adjustment window. For example, such output may be in units of a number of cores. The output is used to determine a size for elastic pool 146, as discussed further below.

VM management appliance 160 logically groups hosts 110 into one or more clusters. For example, VM management appliance 160 may be a host or a VM executing on one of hosts 110. For example, VM management appliance 160 may perform distributed resource scheduling (DRS) services for hosts 110. Such DRS services include migrating VMs between hosts 110 to ensure efficient resource allocation and maintain performance. It should be noted that according to embodiments, when performing DRS services, VM management appliance 160 may disregard the CPU utilization of elastic VMs 124 among hosts 110.

Disregarding elastic VMs 124 among hosts 110 may improve DRS services because, as discussed earlier, on each of hosts 110, elastic VM 124 is able to increase its CPU utilization as such CPU resources become available. Accordingly, the overall utilization of CPU resources of each of hosts 110 may often be high, e.g., above a predetermined threshold. Without.. disregarding elastic VMs 124 among hosts 110, the DRS services may fail to recognize situations in which CPU utilization of priority VMs 122 among hosts 110 is inconsistent. By disregarding elastic VMs 124 among hosts 110, VM management appliance 160 may identify when to migrate one or more of priority VMs 122 between hosts 110 to balance CPU utilization with respect to priority VMs 122.

Shared storage 170 is storage accessible to all of hosts 110. For example, as illustrated in Figure 1A, shared storage 170 may be stored externally from hosts 110, e.g., on one or more magnetic drives or SSDs of a storage array. As another example, although shared storage 170 is illustrated as separate from hosts 110, local storage 150 of hosts 110 may optionally be aggregated and provisioned as a virtual storage area network (vSAN). Shared storage 170 includes a plurality of seed neural networks 172.

Seed neural networks 172 are neural networks previously trained by hosts 110 for predicting CPU utilization of priority VMs 122 or elastic VM 124 executing among hosts 110. Any of hosts 110 may persist one of seed neural networks 172 as a snapshot of one of priority neural networks 134 or elastic neural network 136. For example, one of priority VMs 122 may be migrated from a source host among hosts 110 to a destination host among hosts 110. In response, the destination host may retrieve a corresponding one of seed neural networks 172 from shared storage 170 as one of priority neural networks 134. Such corresponding one of seed neural networks 172 may have been trained by the source host based on the execution of the pre-migrated instance of the one of priority VMs 122. Seed neural networks 172 provide starting points for priority neural networks 134 and elastic neural network 136, i.e., may be earlier versions thereof before additional training. In the above example, utilizing seed neural networks 172 may allow destination hosts of migrations to avoid making inaccurate predictions shortly after migrations.

As another example, one of priority VMs 122 or elastic VM 124 may experience a power-on event. As used herein, a "power-on event" for a VM refers to a moment in which the VM transitions from being powered off or suspended, to an active running state in which it executes a workload. For example, one of priority VMs 122 or elastic VM 124 may have had an unexpected shutdown or a manual reboot, leading to the power-on event. In response, the one of hosts 110 at which the one of priority VMs 122 or elastic VM 124 experienced a power-on event, may retrieve the corresponding one of seed neural networks 172 from shared storage 170 as one of priority neural networks 134 or as elastic neural network 136. Accordingly, the corresponding one of seed neural networks 172 may have been trained by the same one of hosts 110. Such training may have been performed based on the execution of a pre-shutdown or pre-rebooted instance of the one of priority VMs 122 or elastic VM 124. Utilizing seed neural networks 172 may allow hosts 110 to avoid making inaccurate predictions shortly after power-on events.

Load balancer 180 may distribute processing load among hosts 110. For example, load balancer 180 may be a host or a VM executing on one of hosts 110. According to embodiments, load balancer 180 may monitor CPU utilization or application performance of applications running within elastic VMs 124 among hosts 110, and load balancer 180 may distribute processing load to elastic VMs 124 accordingly. For example, elastic VMs 124 among hosts 110 may use neural networks to generate inferences based on queries received from sources external to computer system 100. For example, load balancer 180 may distribute more of such queries to hosts 110 in which elastic pool 146 is larger and less of such queries to hosts 110 in which elastic pool 146 is smaller. This may increase the efficiency in which such queries are processed. Load balancer 180 may also passively update its distribution of queries over time based on performance information, as discussed further below.

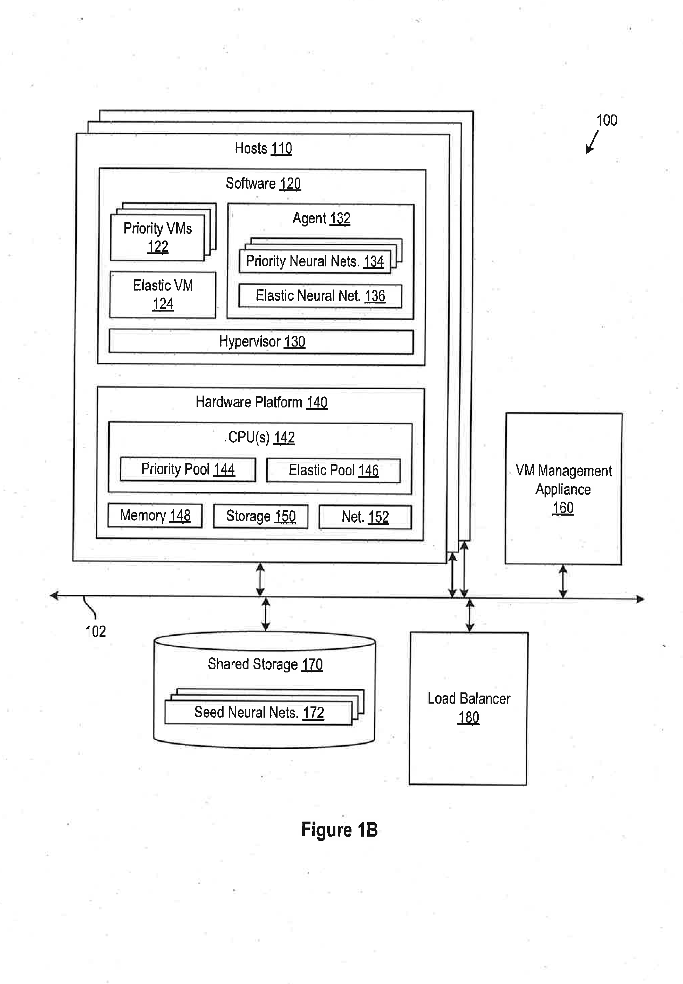

Figure 1B is a block diagram of computer system 100 in which a second embodiment may be implemented. Items that are the same or similar to items of Figure 1A include the same references numbers and will not be explained again. As illustrated in Figure 1B, according to the second embodiment, agent 132 executes outside hypervisor 130 as a separate process. For example, agent 132 may be a VM or container running within a VM.

Because agent 132 executes outside hypervisor 130, agent 132 communicates with hypervisor 130 to determine inputs to priority neural networks 134 and elastic neural network 136. For example, hypervisor 130 may expose an application programming interface (API) for agent 132 to request data points associated with each of priority VMs 122 and elastic VM 124. Agent 132 may then use such data points to calculate metrics, as discussed above. Similar to the first embodiment, hypervisor 130 may collect such data points at polling intervals such as 1-second intervals and over learning windows such as 60-second windows. Hypervisor 130 may then transmit such data points to agent 132 in response to API requests received from agent 132.

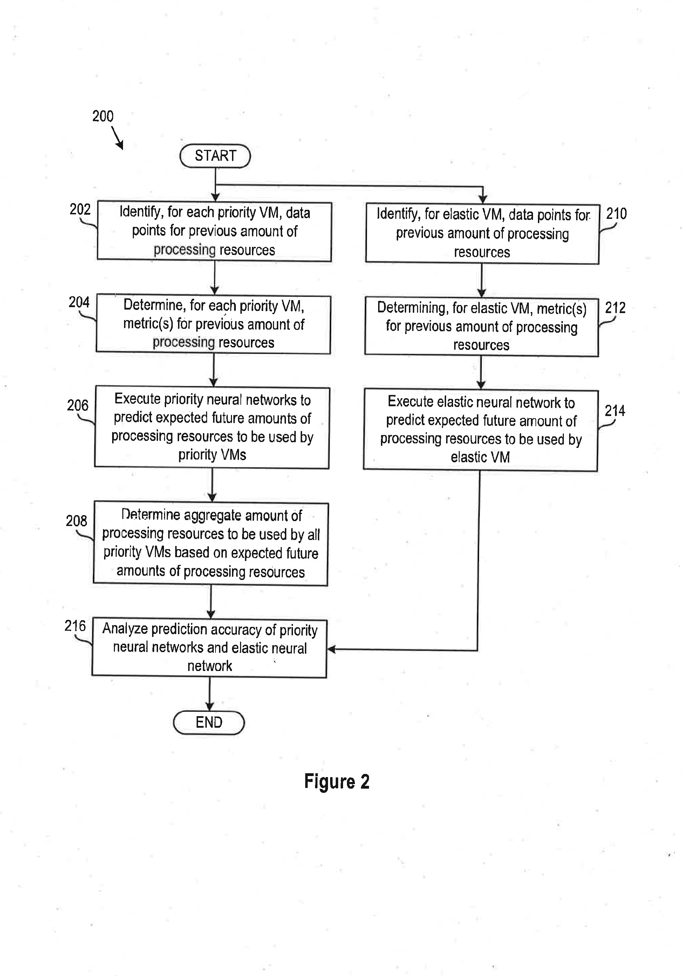

Figure 2 is a flow diagram of a method 200 that may be performed by one of hosts 110 to predict amounts of processing resources to be used by workloads executing thereon, including a plurality of priority workloads and an elastic workload, according to some embodiments. At step 202, host 110 identifies, for each of priority VMs 122 executing thereon, data points for previous amounts of processing resources consumed thereby. For example, if the polling interval is 1 second and the learning window is 60 seconds for all of priority VMs 122, hypervisor 130 may collect 60 of such data points for each of priority VMs 122. At step 204, host 110 may determine, for each of priority VMs 122, one or more metrics for the previous amount of processing resources. Host 110 may determine such metrics based on the data points identified at step 202. For example, for each of priority VMs 122, host 110 may compute one or more of a minimum, maximum, mean, median, and standard deviation.

At step 206, agent 132 executes priority neural networks 134 to predict expected future amounts of processing resources to be used by respective ones of priority VMs 122. Such execution may include inputting to each of priority neural networks 134, the respective one or more metrics determined at step 204. Each of priority neural networks 134 then performs operations in and between layers thereof based on weights and biases to generate an output. Such output includes an expected future amount of processing resources for a respective one of priority VMs 122 over a next affinity pool adjustment window, e.g., as a number of cores.

At step 208, host 110 determines an aggregate amount of processing resources to be used by all of priority VMs 122 executing thereon. Host 110 determines the aggregate amount based on the expected future amounts of processing resources predicted at step 206. For example, host 110 may round individual expected future amounts to whole numbers and then add them together to determine the aggregate amount. As another example, host 110 may add the individual future amounts without first rounding them.

In parallel with steps 202-208, at step 210, host 110 identifies, for elastic VM 124 executing thereon, data points for a previous amount of processing resources consumed thereby. For example, if the polling interval is 1 second and the learning window is 60 seconds for elastic VM 124, hypervisor 130 may collect 60 of such data points. At step 212, host 110 may determine, for elastic VM 124, one or more metrics for the previous amount of processing resources. Host 110 may determine such metrics based on the data points identified at step 210, including e.g., a minimum, maximum, mean, median, and standard deviation.

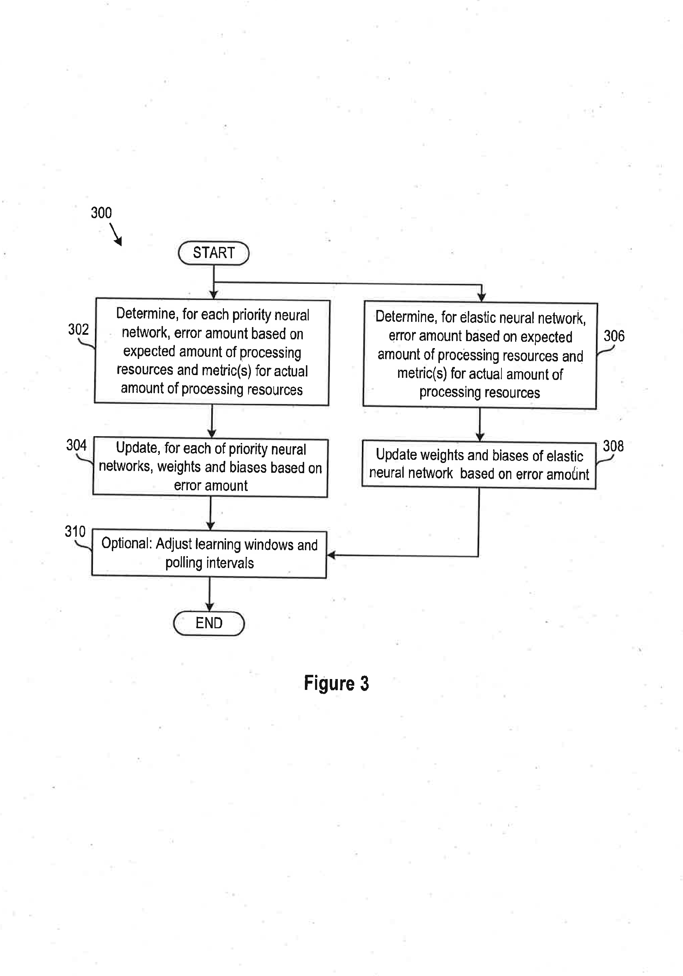

At step 214, agent 132 executes elastic neural network 136 to predict an expected future amount of processing resources to be used by elastic VM 124. Such execution may include inputting, to elastic neural network 136, the one or more metrics determined at step 212. Elastic neural network 136 then performs operations in and between layers thereof based on weights and biases to generate an output. Such output includes an expected future amount of processing resources for elastic VM 124 over a next affinity pool adjustment window, e.g., as a number of cores. After steps 208 and 214, at step 216, host 110 analyzes the prediction accuracy of priority neural networks 134 and elastic neural network 136, as discussed below in conjunction with Figure 3. After step 216, method 200 ends. It should be noted that method 200 may be performed periodically by each of hosts 110 as hosts 110 continuously train priority neural networks 134 and elastic neural network 136.

Figure 3 is a flow diagram of a method 300 that may be performed by one of hosts 110 to train neural networks associated with workloads executing thereon, including a plurality of priority workloads and an elastic workload, and adjust the collection of data points for the workloads, according to some embodiments. At step 302, agent 132 determines, for each of priority neural networks 134, an error amount based on a predicted expected amount of processing resources and one or more metrics for an actual amount of processing resources, for a respective one of priority VMs 122. The predicted amounts of processing resources were generated by priority neural networks 134 based on data points collected over a learning window, as discussed above in conjunction with Figure 2. The metrics for actual amounts of processing resources were determined based on data points collected over a subsequent learning window, i.e., over a subsequent iteration of method 200 of Figure 2. For example, the error amount for each of priority neural networks 134 may be determined as the absolute value of the difference between a predicted number of cores and an actual number of cores required during the subsequent learning window.

At step 304, agent 132 trains each of priority neural networks 134 based on the respective error amount determined at step 302. Such training may include updating weights and biases of each of priority neural networks 134. For example, for one of priority VMs 122, the predicted number of cores may have been 3, and the actual number of cores may have been 3. Agent 132 may thus assign a reward for the prediction and update weights and biases of the respective one of priority neural networks 134 accordingly. With respect to RL, a reward is a positive feedback signal indicating that a prediction aligns with a desired or correct outcome.

As another example, for one of priority VMs 122, the predicted number of cores may have been 1, and the actual number of cores may have been 2. Agent 132 may thus assign a penalty for the prediction based on the difference between these values and update weights and biases of the respective one of priority neural networks 134 accordingly. With respect to RL, a penalty is a negative feedback signal indicating that a prediction is aligned with an undesirable or incorrect outcome. Furthermore, because of the importance of not degrading the performance of priority VMs 122, agent 132 may increase the penalty based on the under-prediction. In other words, agent 132 may assign a larger penalty than if the predicted amount was greater than the actual amount. For example, agent 132 may double the penalty for such an under-prediction owing to the great business risk underprediction represents as compared to overprediction.

In parallel with steps 302-204, at step 306, agent 132 determines, for elastic neural network 136, an error amount based on a predicted expected amount of processing resources and one or more metrics for an actual amount of processing resources for elastic VM 124. The predicted amount of processing resources was generated by elastic neural network 136 based on data points collected over a learning window, as discussed above in conjunction with Figure 2. The one or more metrics for an actual amount of processing resources were determined based on data points collected over a subsequent learning window. Similar to priority neural networks 134, the error amount may be determined as the absolute value of the difference therebetween.

At step 308, agent 132 trains elastic neural network 136 based on the error amount determined at step 306, which may include updating weights and biases thereof. Similar to priority neural networks 134, a reward or penalty may be determined based on a difference between predicted and actual numbers of cores. Agent 132 may then update the weights and biases of elastic neural network 136 according to the penalty or reward.

After steps 304 and 308, at step 310, as an optional step, host 110 may adjust the learning windows and polling intervals for collecting data points for priority VMs 122 and elastic VM 124. For example, for any of priority VMs 122 and elastic VM 124, host 110 may compare the data points collected during one time interval to the data points collected during a subsequent time interval. If CPU utilization of one of the VMs between time intervals remains consistent, e.g., based on probability distributions of the respective sets of data points, host 110 may determine that execution of the VM is stable. In other words, for any of priority VMs 122 and elastic VM 124, if a change in the amount of processing resources used is less than a threshold, host 110 may determine that the VM is stable. Otherwise, host 110 may determine that execution of the VM is unstable.

For example, according to embodiments in which there is a single learning window across VMs, if host 110 determines that execution of any of priority VMs 122 or elastic VM 124 is unstable, host 110 may decrease the learning window to increase the accuracy of future predictions. On the other hand, for example, if host 110 determines that the executions of all of priority VMs 122 and elastic VM 124 are stable, host 110 may maintain the current learning window or may increase the learning window to preserve resources of host 110. According to embodiments in which there are multiple learning windows, e.g., one of each of priority VMs 122 and one for elastic VM 124, host 110 may make such adjustments on a per-VM basis. Host 110 may thus decrease the learning window for any VM that is unstable or may maintain or increase the learning window for any VM that is stable. Furthermore, host 110 may update polling intervals based on updates to learning windows to keep the numbers of data points per learning window consistent. After step 310, method 300 ends.

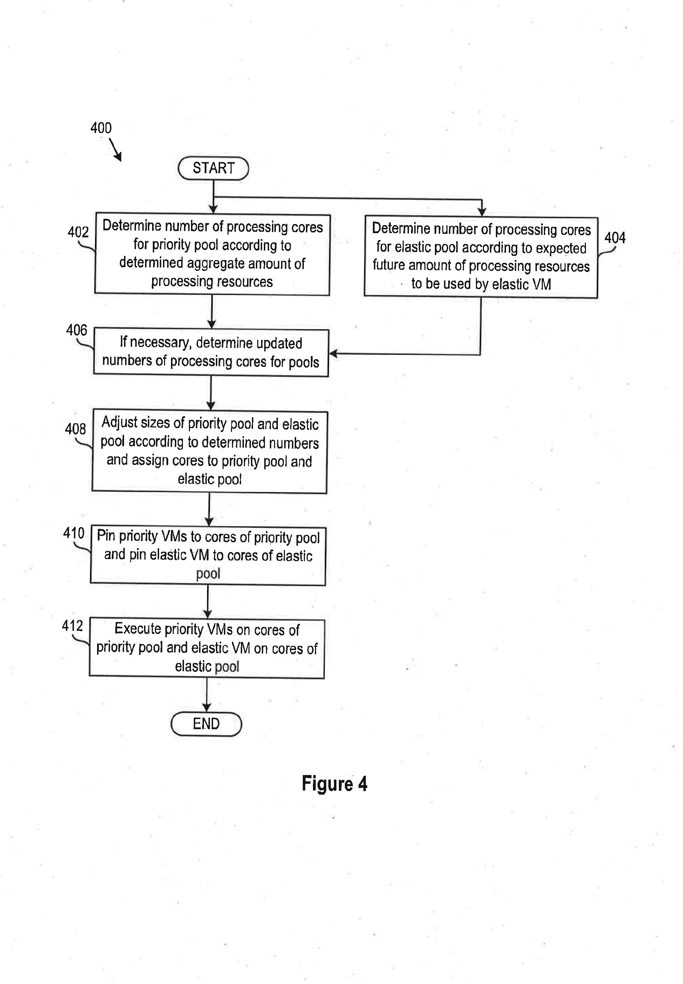

Figure 4 is a flow diagram of a method 400 that may be performed by one of hosts 110 to adjust the sizes of pools of processing cores for workloads executing thereon, including a plurality of priority workloads and an elastic workload, and execute the workloads on the processing cores of the priority pools, according to some embodiments. At step 402, host 110 determines a number of processing cores of CPU(s) 142 to assign to priority pool 144 according to a determined aggregate amount of processing resources. The determination of the aggregate amount is discussed above in conjunction with Figure 2. For example, if the aggregate amount is a fractional number of cores, host 110 may round the aggregate amount to a whole number as the number of processing cores for priority pool 144.

In parallel with step 402, at step 404, host 110 determines a number of processing cores of CPU(s) 142 to assign to elastic pool 146 according to an expected future amount of processing resources to be used by elastic VM 124. The determination of the expected future amount is discussed above in conjunction with Figure 2. For example, if the expected future amount is a fractional number of cores, host 110 may round the expected future amount to a whole number as the number of processing cores for elastic pool 146.

After steps 402 and 404, at step 406, if necessary, host 110 may determine to adjust the numbers of processing cores determined at steps 402 and 404. For example, host 110 may determine that the total number of processing cores of CPU(s) 142 available to priority VMs 122 and elastic VM 124, exceeds the sum of the two numbers determined at steps 402 and 404. Host 110 may update either or both of the numbers as desired to account for the full available capacity of CPU(s) 142, e.g., according to a pre-determined ratio.

As one policy example, host 110 may increase the number of processing cores to be assigned to priority pool 144 by most of the extra available cores, e.g., by adding two-thirds of the extra amount thereto, and host 110 may increase the number for elastic pool 146 by the remainder of the extra amount. Such a policy may reduce the risk of degrading the performance of priority VMs 122 when the prediction for the amount of processing resources required thereby is too low. On the other hand, such policy may still provide extra processing resources to elastic pool 146, which elastic VM 124 is expected to be able to make use of. As another policy example, host 110 may increase the number for priority pool 144 by the entire extra amount to further reduce the risk of degrading the performance of any of priority VMs 122.

Additionally, in some cases, the total number of processing cores of CPU(s) 142 available to priority VMs 122 and elastic VM 124, may be less than the sum of the two numbers. In such case, host 110 may, as one policy example, decrease the number for elastic pool 146 by the requisite amount to bring the sum down to the total number of available cores. Such policy may allow for still providing enough processing resources to avoid degrading the performance of priority VMs 122.

At step 408, host 110 may adjust the sizes of priority pool 144 and elastic pool 146 according to the determined numbers and assign cores of CPU(s) 142 to priority pool 144 and elastic pool 146 according to the adjusted sizes. For example, host 110 may update metadata or internal data structures associated with priority pool 144 and elastic pool 146 to reflect respective updated pool sizes. At step 410, host 110 may pin priority VMs 122 and elastic VM 124 to cores of priority pool 144 and elastic pool 146, respectively. Such pinning prevents priority VMs 122 from executing on any of the cores of elastic pool 146. Similarly, such pinning prevents elastic VM 124 from executing on any of the cores of priority pool 144.

At step 412, host 110 executes priority VMs 122 on cores of priority pool 144 and executes elastic VM 124 on cores of elastic pool 146. After step 412, method 400 ends. It should be noted that load balancer 180 may continuously monitor the performance of elastic VMs 124 on hosts 110. For example, if elastic VMs 124 perform processing based on queries, such performance may include metrics such as a token rate per second for each of elastic VMs 124, i.e., throughputs at which elastic VMs 124 are evaluating tokens in response to queries. For example, as the throughput for one of elastic VMs 124 increases, load balancer 180 may distribute more queries thereto. As the throughput for another one of elastic VMs 124 decreases, load balancer 180 may distribute less queries thereto.

As discussed above, according to some embodiments, there may be multiple learning windows, e.g., one for each of priority VMs 122 and one for elastic VM 124. It should be noted that according to such embodiments, method 400 may be performed at once at the end of an affinity pool adjustment window. In other words, the adjustment of priority pool 144 and elastic pool 146 may be made periodically for all of priority VMs 122 and elastic VM 124 even if priority VMs 122 and elastic VM 124 have different learning windows. For example, learning windows may range from 20 seconds to 60 seconds, while the affinity pool adjustment window may be 60 seconds for all of priority VMs 122 and elastic VM 124.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term'computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest OS that perform virtualization functions.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A host computer including a processor having a plurality of processing cores and memory, wherein the processor executes instructions stored in the memory to perform steps for executing a plurality of priority workloads and an elastic workload using machine-learning (ML) models, to increase a compute density of the host computer, the steps comprising:
determining, for each of the priority workloads, one or more metrics for a previous amount of processing resources used thereby;
executing first ML models respectively associated with the priority workloads to predict expected future amounts of processing resources to be used respectively by the priority workloads, each of the first ML models being executed based on the determined one or more metrics for the previous amount of processing resources used by the respective priority workload, and determining an aggregate amount of processing resources to be used by all the priority workloads based on the expected future amounts of processing resources to be used by the priority workloads;
determining, for the elastic workload, one or more metrics for a previous amount of processing resources used thereby;
executing a second ML model associated with the elastic workload to predict an expected future amount of processing resources to be used by the elastic workload, the second ML model being executed based on the determined one or more metrics for the previous amount of processing resources used by the elastic workload; and
executing the priority workloads on a first number of processing cores of the processor, and executing the elastic workload on a second number of processing cores of the processor, according to the determined aggregate amount of processing resources to be used by all the priority workloads and the expected future amount of processing resources to be used by the elastic workload.

2. The host computer of claim 1, wherein the first ML models and second ML model are artificial neural networks, and the steps further comprise:
determining, for each of the priority workloads after executing the priority workloads on the first number of processing cores, one or more metrics for an actual amount of processing resources used by the priority workload;
determining, for each of the first ML models, a first error amount based on the expected future amount of processing resources to be used by the respective priority workload and the one or more metrics for the actual amount of processing resources used by the respective priority workload; and
updating, for each of the first ML models, weights thereof based on the first error amount thereof.

3. The host computer of any preceding claim, wherein the steps further comprise:
determining, for each of the first ML models, a first reward or a first, penalty based on the first error amount thereof, the weights of each of the first ML models being updated according to the first reward or first penalty thereof.

4. The host computer of any preceding claim, wherein the steps further comprise:
determining, for the elastic workload after executing the elastic workload on the second number of processing cores, one or more metrics for an actual amount of processing resources used by the elastic workload;
determining, for the second ML model, a second error amount based on the expected future amount of processing resources to be used by the elastic workload and the one or more metrics for the actual amount of processing resources used by the elastic workload; and
updating weights of the second ML model based on the second error amount.

5. The host computer of any preceding claim, wherein the steps further comprise:
retrieving, from shared storage, a seed model associated with one of the first ML models, the seed model being an earlier version of the one of the first ML models, and the seed model having been trained by the host computer or by another host computer based on another instance of one of the priority workloads executing on the host computer or on the other host computer.

6. The host computer of any preceding claim, wherein the steps further comprise:
querying, using an agent process separate from a hypervisor executing on the host computer, the hypervisor to determine the one or more metrics for the previous amounts of processing resources used by the priority workloads, the agent process executing the first ML models and the second ML model; and
querying, using the agent process, the hypervisor to determine the one or more metrics for the previous amount of processing resources used by the elastic workload.

7. The host computer of any preceding claim, wherein the steps further comprise:
identifying, for each of the priority workloads and for the elastic workload, data points for the previous amount of processing resources used thereby, the data points for each of the priority workloads and for the elastic workload being collected at polling intervals over a learning window.

8. The host computer of claim 7, wherein the steps further comprise:
determining, for each of the priority workloads, the one or more metrics for the previous amount of processing resources used thereby as one or more of a minimum, maximum, mean, median, and standard deviation, of the data points for the priority workload; and
determining, for the elastic workload, the one or more metrics for the previous amount of processing resources used thereby as one or more of a minimum, maximum, mean, median, and standard deviation, of the data points for the elastic workload.

9. The host computer of claim 7 or 8, wherein the previous amount of processing resources used by one of the priority workloads or by the elastic workload was used over a first time period, and wherein the steps further comprise:
determining, for the one of the priority workloads or the elastic workload based on the previous amount of processing resources used thereby and based on an amount of processing resources used thereby during a second time period before the first time period, that a change in the amount of processing resources used thereby is less than a threshold; and
increasing a learning window for collecting data points based on the change being less than the threshold.

10. The host computer of any preceding claim, wherein the steps further comprise:
pinning each of the priority workloads to one or more processing cores of a first affinity pool of the host computer, the first affinity pool including the first number of processing cores; and
pinning the elastic workload to a plurality of processing cores of a second affinity pool of the host computer, the second affinity pool including the second number of processing cores, and the first and second affinity pools including separate processing cores of the host computer.

11. The host computer of any preceding claim, wherein the steps further include:
determining that the determined aggregate amount of processing resources to be used by all the priority workloads and the expected future amount of processing resources to be used by the elastic workload, combine to exceed a total amount of processing resources of the host computer available to the priority workloads and elastic workload, and in response thereto, decreasing the second number of processing cores of the processor.

12. The host computer of any preceding claim, wherein the steps further include:
determining that the determined aggregate amount of processing resources to be used by all the priority workloads and the expected future amount of processing resources to be used by the elastic workload, combine to be less than a total amount of processing resources of the host computer available to the priority workloads and elastic workload, and in response thereto, increasing the first and second numbers of cores according to a pre-determined ratio.

13. A method of executing a plurality of priority workloads and an elastic workload using machine-learning (ML) models, to increase a compute density of a host computer, the method comprising:
determining, for each of the priority workloads, one or more metrics for a previous amount of processing resources used thereby;
executing first ML models respectively associated with the priority workloads to predict expected future amounts of processing resources to be used respectively by the priority workloads, each of the first ML models being executed based on the determined one or more metrics for the previous amount of processing resources used by the respective priority workload, and determining an aggregate amount of processing resources to be used by all the priority workloads based on the expected future amounts of processing resources to be used by the priority workloads;
determining, for the elastic workload, one or more metrics for a previous amount of processing resources used thereby;
executing a second ML model associated with the elastic workload to predict an expected future amount of processing resources to be used by the elastic workload, the second ML model being executed based on the determined one or more metrics for the previous amount of processing resources used by the elastic workload; and
executing the priority workloads on a first number of processing cores of a processor, and executing the elastic workload on a second number of processing cores of the processor, according to the determined aggregate amount of processing resources to be used by all the priority workloads and the expected future amount of processing resources to be used by the elastic workload.

14. The method of claim 13, wherein the first ML models and second ML model are artificial neural networks, the method further comprising:
determining, for each of the priority workloads after executing the priority workloads on the first number of processing cores, one or more metrics for an actual amount of processing resources used by the priority workload;
determining, for each of the first ML models, a first error amount based on the expected future amount of processing resources to be used by the respective priority workload and the one or more metrics for the actual amount of processing resources used by the respective priority workload; and
updating, for each of the first ML models, weights thereof based on the first error amount thereof.

15. A non-transitory, computer-readable medium comprising instructions that are executable in a host computer, wherein the instructions when executed cause the host computer to carry out a method of executing a plurality of priority workloads and an elastic workload using machine-learning (ML) models, to increase a compute density of the host computer, and wherein the method comprises:
determining, for each of the priority workloads, one or more metrics for a previous amount of processing resources used thereby;
executing first ML models respectively associated with the priority workloads to predict expected future amounts of processing resources to be used respectively by the priority workloads, each of the first ML models being executed based on the determined one or more metrics for the previous amount of processing resources used by the respective priority workload, and determining an aggregate amount of processing resources to be used by all the priority workloads based on the expected future amounts of processing resources to be used by the priority workloads;
determining, for the elastic workload, one or more metrics for a previous amount of processing resources used thereby;
executing a second ML model associated with the elastic workload to predict an expected future amount of processing resources to be used by the elastic workload, the second ML model being executed based on the determined one or more metrics for the previous amount of processing resources used by the elastic workload; and
executing the priority workloads on a first number of processing cores of a processor of the host computer, and executing the elastic workload on a second number of processing cores of the processor, according to the determined aggregate amount of processing resources to be used by all the priority workloads and the expected future amount of processing resources to be used by the elastic workload.
